# EUROPÄISCHE PATENTSCHRIFT

(11) **EP 3 001 647 B1**
(45) Veröffentlichungstag und Bekanntmachung des Hinweises auf die Patenterteilung: **01.11.2017**
(21) Anmeldenummer: 14185907.4
(22) Anmeldetag: 23.09.2014
(51) Int. Cl.: H04L 29/12, G05B 19/418

(54) **Verfahren zum Aufbau einer gesicherten Kommunikationsverbindung, Kommunikationsgerät und Verbindungssteuerungseinheit**
Method for setting up a secure communication link, communication device and connection control unit
Procédé d'établissement d'une liaison de communication sécurisée, appareil de communication et unité de commande de liaison

(43) Veröffentlichungstag der Anmeldung: 30.03.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- EP-A2- 1 770 458
- US-A1- 2004 136 382
- US-A1- 2005 066 041

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In EP 1 770 458 A2 ist ein industrielles Automatisierungssystem mit zumindest einer speicherprogrammierbaren Steuerungseinheit beschrieben, bei dem eine Konfigurationseinheit zur Konfiguration der Steuerungseinheit und zur Bekanntgabe ihrer Verfügbarkeit an einem Kommunikationsnetz vorgesehen ist. Die Konfigurationseinheit weist der Steuerungseinheit dabei eine eindeutige Kommunikationsnetzadresse zu, die beispielsweise eine IPv6-Adresse sein kann. Auf diese Weise kann die Steuerungseinheit automatisch in Betrieb genommen werden.

Aus US 2004/0136382 A1 ist ein Verfahren zur Übermittlung von IPv4-Datenverkehr über ein IPv6-Kommunikationsnetz bekannt, bei dem das IPv6-Kommunikationsnetz zumindest einen mobilen Netzknoten umfasst. Jedem mobilen Netzknoten ist eine Heimatadresse und zusätzlich eine Care-of-Adresse zugeordnet, wobei die Care-of-Adresse genutzt wird, wenn sich der mobile Netzknoten von seiner von der Heimatadresse entfernt befindet. In einem ersten Netzknoten erfolgt ein Beibehalten von Verknüpfungen, wobei jede Verknüpfung eine Zuordnung der Heimatadresse eines mobilen Netzknotens zu einer Care-of-Adresse des mobilen Netzknotens ist. Ein Datenpaket mit einer Verknüpfungsaktualisierung wird an den ersten Netzknoten gesendet, wobei das Datenpaket eine neue Care-of-Adresse und die Heimatadresse des mobilen Netzknotens umfasst. Außerdem wird eine Verknüpfung zwischen einer IPv4-Heimatadresse und der Care-of-Adresse angegeben, indem eine IPv6-Adresse mit einer darin eingebetteten IPv4-Heimatadresse als die Heimatadresse in das Datenpaket mit der Verknüpfungsaktualisierung eingefügt wird.

In US 2005/066041 A1 ist ein Verfahren zur automatischen Einrichtung einer Umleitung für DNS-Namensauflösungsanfragen beschrieben, bei dem eine DNS-Konfigurationsnachricht über einen VPN-Tunnel an ein Remote Gateway übermittelt wird. Dabei umfasst die DNS-Konfigurationsnachricht einen global gültigen Namen eines Heimatnetzes und eine lokale Adresse eines DNS-Servers im Heimatnetz. Auf die DNS-Konfigurationsnachricht übermittelt das Remote Gateway eine Antwortnachricht über den VPN-Tunnel, wobei die Antwortnachricht einen global gültigen Namen eines anderen Heimatnetzes und eine lokale Adresse eines DNS-Servers im anderen Heimatnetz umfasst. Bei Empfang der Antwortnachricht wird ein Application Level Gateway des DNS-Servers im Heimatnetz dafür konfiguriert, DNS-Namensauflösungsanfragen zum global gültigen Namen des anderen Heimatnetzes an den DNS-Server des anderen Heimatnetzes weiterzuleiten.

Aus der älteren europäischen Patentanmeldung EP 2 955 904 A1 ist ein Verfahren zur Vergabe von Kommunikationsnetzadressen für Netzteilnehmer eines segmentierten Netzes mit mehreren Subnetzen bekannt. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

Insbesondere in IPv6-Kommunikationsnetzen stellen Änderungen von Kommunikationsnetzadressen im Rahmen eines "Network Renumbering" grundsätzlich vorgesehene Vorgänge dar. Zudem können IPv6-Kommunikationsgeräte mehrere zugeordnete Kommunikationsnetzadressen gleichzeitig verwalten, die jeweils eine definierte Lebensdauer aufweisen. Bei einer bestehenden gesicherten Verbindung zwischen einem Kommunikationsgerät innerhalb eines industriellen Kommunikationsnetzes und einem Kommunikationsgerät außerhalb des industriellen Kommunikationsnetzes kann eine Änderung einer Kommunikationsnetzadresse eines der beiden Kommunikationsgeräte zu einer temporären Unterbrechung führen, die weitere Störungen nach sich ziehen kann.

Der vorliegenden Erfindung liegt daher die Aufgabe zugrunde, ein Verfahren zum Aufbau einer gesicherten Kommunikationsverbindung zu schaffen, das einen im wesentlichen kontinuierlichen Betrieb bei Änderungen von Kommunikationsnetzadressen während bestehender Verbindungen ermöglicht, sowie geeignete Vorrichtungen zu dessen Durchführung anzugeben.

Diese Aufgabe wird erfindungsgemäß durch ein Verfahren mit den in Anspruch 1 angegebenen Merkmalen, durch ein Kommunikationsgerät mit den in Anspruch 11 angegebenen Merkmalen und durch eine Verbindungssteuerungseinheit mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Aufbau einer gesicherten Kommunikationsverbindung zu einem mit einem industriellen Automatisierungssystem verbundenen Kommunikationsgerät wird eine gesicherte Kommunikationsverbindung zwischen einem ersten Kommunikationsgerät und einem zweiten Kommunikationsgerät über ein ungesichertes erstes Teilnetz aufgebaut. Dabei ist das zweite Kommunikationsgerät zusätzlich an ein gesichertes zweites Teilnetz angeschlossen, das dem industriellen Automatisierungssystem zugeordnet ist. Eine dem zweiten Kommunikationsgerät zugeordnete Überwachungseinheit überprüft, ob eine neue dem zweiten Kommunikationsgerät für eine Verbindung zum ersten Teilnetz zugeordnete Kommunikationsnetzadresse gültig wird.

Erfindungsgemäß übermittelt die Überwachungseinheit bei einem Wechsel einer dem zweiten Kommunikationsgerät für eine Verbindung zum ersten Teilnetz zugeordneten Kommunikationsnetzadresse und einer noch bestehenden gesicherten Kommunikationsverbindung zwischen dem ersten und dem zweiten Kommunikationsgerät eine Adresswechselankündigung über die bestehende gesicherte Kommunikationsverbindung an das erste Kommunikationsgerät. Bei Empfang einer Adresswechselankündigung leitet das erste Kommunikationsgerät einen Aufbau einer zusätzlichen gesicherten Kommunikationsverbindung zwischen dem ersten und dem zweiten Kommunikationsgerät über das erste Teilnetz ein. Die bestehende bzw. die zusätzliche gesicherte Kommunikationsverbindung können beispielsweise ein Virtual Private Network Tunnel sein. Sobald die zusätzliche gesicherte Kommunikationsverbindung aufgebaut und eingerichtet ist, schließt das erste Kommunikationsgerät eine Umschaltung von der bestehenden gesicherten Kommunikationsverbindung auf die zusätzliche gesicherte Kommunikationsverbindung ab. Auf diese Weise kann grundsätzlich eine stoßfreie Umschaltung sichergestellt werden.

Entsprechend einer bevorzugten Ausgestaltung des erfindungsgemäßen Verfahrens wird das zweite Teilnetz durch das zweite Kommunikationsgerät gegenüber unzulässigem Datenverkehr gesichert. Beispielsweise kann das zweite Kommunikationsgerät ein Gateway sein. Darüber kann das zweite Kommunikationsgerät in ein industrielles Automatisierungsgerät integriert oder durch eine Rechnereinheit implementiert sein.

Die dem zweiten Kommunikationsgerät zugeordnete Kommunikationsnetzadresse ist vorzugsweise eine IPv6-Adresse. In diesem Fall übermittelt die Überwachungseinheit die Adresswechselankündigung bei einem IPv6-Präfixwechsel an das erste Kommunikationsgerät. Insbesondere kann die Überwachungseinheit die Adresswechselankündigung bei einem Network Renumbering an das erste Kommunikationsgerät übermitteln. Damit ist ein häufiger Anwendungsfall für IPv6-Adresswechsel abgedeckt.

Entsprechend einer vorteilhaften Weiterbildung des erfindungsgemäßen Verfahrens übermittelt die Überwachungseinheit die Adresswechselankündigung an einen dem ersten Kommunikationsgerät zugeordneten Tunnel-Controller. Vorzugsweise leitet der Tunnel-Controller den Aufbau der zusätzlichen gesicherten Kommunikationsverbindung bei einer von der Adresswechselankündigung umfassten neuen Kommunikationsnetzadresse des zweiten Kommunikationsgeräts ein. Entsprechend einer weiteren Ausgestaltung der vorliegenden Erfindung baut der Tunnel-Controller die vormals bestehende gesicherte Kommunikationsverbindung nach der Umschaltung auf die zusätzliche gesicherte Kommunikationsverbindung ab. Damit ist konsistente und zuverlässige Verbindungsumschaltung gewährleistet.

Das erfindungsgemäße mit einem industriellen Automatisierungssystem verbindbare Kommunikationsgerät zur Durchführung eines Verfahrens entsprechend vorangehenden Ausführungen umfasst zumindest zwei Kommunikationsnetzanschlüsse zum Anschluss an ein ungesichertes erstes Teilnetz und an ein gesichertes zweites Teilnetz, das dem industriellen Automatisierungssystem zugeordnet ist. Darüber hinaus ist eine Überwachungseinheit vorgesehen, die dafür ausgestaltet und eingerichtet ist zu überprüfen, ob eine neue für eine Verbindung zum ersten Teilnetz zugeordnete Kommunikationsnetzadresse gültig wird. Dabei ist die Überwachungseinheit zusätzlich dafür ausgestaltet und eingerichtet, bei einem Wechsel einer für eine Verbindung zum ersten Teilnetz zugeordneten Kommunikationsnetzadresse und einer noch bestehenden gesicherten Kommunikationsverbindung zu einem weiteren an das erste Teilnetz angeschlossenen Kommunikationsgerät eine Adresswechselankündigung über die bestehende gesicherte Kommunikationsverbindung an das weitere Kommunikationsgerät zu übermitteln.

Die erfindungsgemäße Verbindungssteuerungseinheit für ein zum Kommunikationsgerät gemäß vorangehenden Ausführungen komplementäres Kommunikationsgerät ist dafür ausgestaltet und eingerichtet, einen Aufbau einer gesicherten Kommunikationsverbindung zwischen einem ersten Kommunikationsgerät und einem zweiten Kommunikationsgerät über ein ungesichertes erstes Teilnetz einzuleiten. Dabei ist das zweite Kommunikationsgerät zusätzlich an ein gesichertes zweites Teilnetz angeschlossen ist, das einem industriellen Automatisierungssystem zugeordnet ist. Außerdem ist die Verbindungssteuerungseinheit dafür ausgestaltet und eingerichtet, bei Empfang einer Adresswechselankündigung für das zweite Kommunikationsgerät einen Aufbau einer zusätzlichen gesicherten Kommunikationsverbindung zwischen dem ersten und dem zweiten Kommunikationsgerät über das erste Teilnetz einzuleiten. Darüber hinaus ist die Verbindungsteuerungseinheit dafür ausgestaltet und eingerichtet, eine Umschaltung von der bestehenden gesicherten Kommunikationsverbindung auf die zusätzliche gesicherte Kommunikationsverbindung abzuschließen, sobald die zusätzliche gesicherte Kommunikationsverbindung aufgebaut und eingerichtet ist.

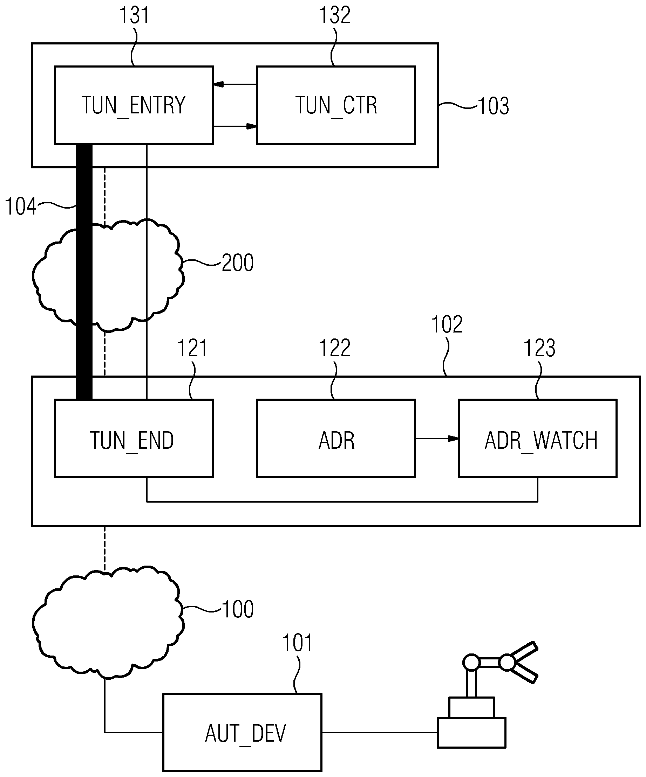

Die vorliegende Erfindung wird nahfolgend an einem Ausführungsbeispiel anhand der Zeichnung näher beschrieben. Es zeigt die
- Figur: ein industrielles Automatisierungssystem mit einem Engineering-System als Anfangspunkt einer VPN-Verbindung und einem Gateway eines industriellen Kommunikationsnetzes als Endpunkt der VPN-Verbindung.

Das in der Figur dargestellte industrielle Automatisierungssystem umfasst zumindest ein Engineering-System 103 zur Projektierung und Überwachung von Automatisierungsgeräten, ein Gateway 102 eines industriellen Kommunikationsnetzes 100 und ein exemplarisches Automatisierungsgerät 101. Das Engineering-System 103 und der Gateway 102 sind über ein ungesichertes erstes Teilnetz 200 miteinander verbunden. Im vorliegenden Ausführungsbeispiel ist das ungesicherte erste Teilnetz 200 das Internet. Demgegenüber stellt das industrielle Kommunikationsnetz 100, über das der Gateway 102 und das Automatisierungsgerät 101 miteinander verbunden sind, ein gesichertes zweites Teilnetz dar.

Das Automatisierungsgerät 101 umfasst im vorliegenden Ausführungsbeispiel eine Kommunikationseinheit und kann beispielsweise eine speicherprogrammierbare Steuerung oder ein Feldgerät sein. Durch den Gateway 102 wird das industrielle Kommunikationsnetz 100 gegenüber unzulässigem Datenverkehr gesichert. Der Gateway 102 kann beispielsweise in ein industrielles Automatisierungsgerät integriert oder durch eine Rechnereinheit implementiert sein.

Zwischen dem Engineering-System 103 und dem Gateway 102 wird zumindest eine VPN-Verbindung 104 (virtual private network) als gesicherter Kommunikationsverbindung über das ungesicherte erste Teilnetz 200 aufgebaut. Dabei ist dem Engineering-System 103 ein Tunneleingangspunkt 131 zugeordnet, während der Gateway 102 einen Tunnelendpunkt 121 umfasst. Eine dem Gateway 102 zugeordnete Überwachungseinheit 123 überprüft fortlaufend, ob eine neue dem Gateway 102 für eine Verbindung zum ersten Teilnetz 200 zugeordnete Kommunikationsnetzadresse 122 gültig wird.

Bei einem Wechsel einer dem Gateway 102 für eine Verbindung zum ersten Teilnetz 200 zugeordneten Kommunikationsnetzadresse 122 und einer noch bestehenden gesicherten Kommunikationsverbindung 104 zwischen dem Engineering-System 103 und dem Gateway 102 übermittelt die Überwachungseinheit 123 eine Adresswechselankündigung über die bestehende gesicherte Kommunikationsverbindung 104 an einen dem Engineering-System 103 zugeordneten Tunnel-Controller 132. Der Tunnel-Controller 132 leitet bei Empfang einer Adresswechselankündigung bzw. einer neuen Kommunikationsnetzadresse 122 des Gateway 102 einen Aufbau einen zusätzlichen gesicherten Kommunikationsverbindung zwischen dem Engineering-System 103 und dem Gateway 102 über das erste Teilnetz 200 ein. Das Engineering-System 103 schließt eine stoßfreie Umschaltung von der bestehenden gesicherten Kommunikationsverbindung 104 auf die zusätzliche gesicherte Kommunikationsverbindung ab, sobald die zusätzliche gesicherte Kommunikationsverbindung aufgebaut und eingerichtet ist. Dabei baut der Tunnel-Controller 132 die vormals bestehende gesicherte Kommunikationsverbindung nach der Umschaltung auf die zusätzliche gesicherte Kommunikationsverbindung ab.

Im vorliegenden Ausführungsbeispiel sind die dem Gateway 102 zugeordneten Kommunikationsnetzadressen 122 IPv6-Adressen. Dabei übermittelt die Überwachungseinheit 123 insbesondere bei IPv6-Präfixwechseln Adresswechselankündigungen an das Engineering-System 103. Dies kann beispielsweise im Rahmen eines Network Renumbering erfolgen.

Insgesamt sind entsprechend dem vorliegenden Ausführungsbeispiel zwei neue Elemente vorgesehen, nämlich die Überwachungseinheit 123 auf Seiten des Gateway 102 und der Tunnel-Controller 132 auf Seiten des Engineering-Systems 103. Die Überwachungseinheit 123 erfasst und überwacht dem Gateway 102 zugewiesene IPv6-Adressen und benachrichtigt den Tunnel-Controller 132 über Adressänderungen Der Tunnel-Controller 132 stößt bei Adressänderungen den Aufbau einer neuen VPN-Verbindung an und baut die bisherige VPN-Verbindung 104 ab.

Die beiden neuen Elemente entsprechend dem vorliegenden Ausführungsbeispiel bieten insgesamt folgende Vorteile:
- stoßfreier VPN-Tunnelbetrieb mit wechselnden IPv6-Präfixen und somit wechselnden IPv6-Adressen,
- keine Wartezeiten, bis neu zugewiesene Adressen nach Adressänderungen in einem Domain Name System (DNS) sichtbar werden, stattdessen sofortiges Umschalten möglich, ohne dass auf DNS zurückgegriffen wird,
- Betrieb mit Provider Aggregatable (PA) IPv6-Adressen möglich, keine Notwendigkeit für Provider Independent (PI) IPv6-Adressen.

## Patentansprüche

1. Verfahren zum Aufbau einer gesicherten Kommunikationsverbindung zu einem mit einem industriellen Automatisierungssystem verbundenen Kommunikationsgerät, bei dem
- eine gesicherte Kommunikationsverbindung (104) zwischen einem ersten Kommunikationsgerät (103) und einem zweiten Kommunikationsgerät (102) über ein ungesichertes erstes Teilnetz (200) aufgebaut wird, wobei das zweite Kommunikationsgerät (102) zusätzlich an ein gesichertes zweites Teilnetz (100) angeschlossen ist, das dem industriellen Automatisierungssystem zugeordnet ist,
- eine dem zweiten Kommunikationsgerät (102) zugeordnete Überwachungseinheit (123) überprüft, ob eine neue dem zweiten Kommunikationsgerät (102) für eine Verbindung zum ersten Teilnetz (200) zugeordnete Kommunikationsnetzadresse (122) gültig wird,
- die Überwachungseinheit (123) bei einem Wechsel einer dem zweiten Kommunikationsgerät (102) für eine Verbindung zum ersten Teilnetz (200) zugeordneten Kommunikationsnetzadresse (122) und einer noch bestehenden gesicherten Kommunikationsverbindung (104) zwischen dem ersten (103) und dem zweiten Kommunikationsgerät (102) eine Adresswechselankündigung über die bestehende gesicherte Kommunikationsverbindung (104) an das erste Kommunikationsgerät (103) übermittelt,
- das erste Kommunikationsgerät (103) bei Empfang einer Adresswechselankündigung einen Aufbau einer zusätzlichen gesicherten Kommunikationsverbindung zwischen dem ersten (103) und dem zweiten Kommunikationsgerät (102) über das erste Teilnetz (200) einleitet,
- das erste Kommunikationsgerät (103) eine Umschaltung von der bestehenden gesicherten Kommunikationsverbindung (104) auf die zusätzliche gesicherte Kommunikationsverbindung abschließt, sobald die zusätzliche gesicherte Kommunikationsverbindung aufgebaut und eingerichtet ist.

2. Verfahren nach Anspruch 1,
bei dem das zweite Teilnetz (100) durch das zweite Kommunikationsgerät (102) gegenüber unzulässigem Datenverkehr gesichert wird.

3. Verfahren nach Anspruch 2,
bei dem das zweite Kommunikationsgerät (102) ein Gateway ist.

4. Verfahren nach einem der Ansprüche 1 bis 3,
bei dem das zweite Kommunikationsgerät (102) in ein industrielles Automatisierungsgerät integriert oder durch eine Rechnereinheit implementiert ist.

5. Verfahren nach einem der Ansprüche 1 bis 4,
bei dem die dem zweiten Kommunikationsgerät (102) zugeordnete Kommunikationsnetzadresse (122) eine IPv6-Adresse ist, und bei dem die Überwachungseinheit (123) die Adresswechselankündigung bei einem IPv6-Präfixwechsel an das erste Kommunikationsgerät (103) übermittelt.

6. Verfahren nach Anspruch 5,
bei dem die Überwachungseinheit (123) die Adresswechselankündigung bei einem Network Renumbering an das erste Kommunikationsgerät (103) übermittelt.

7. Verfahren nach einem der Ansprüche 1 bis 6,
bei dem die bestehende und/oder zusätzliche gesicherte Kommunikationsverbindung (104) ein Virtual Private Network Tunnel ist.

8. Verfahren nach einem der Ansprüche 1 bis 7,
bei dem die Überwachungseinheit (1239 die Adresswechselankündigung an einen dem ersten Kommunikationsgerät (103) zugeordneten Tunnel-Controller (132) übermittelt.

9. Verfahren nach Anspruch 8,
bei dem der Tunnel-Controller (132) den Aufbau der zusätzlichen gesicherten Kommunikationsverbindung bei einer von der Adresswechselankündigung umfassten neuen Kommunikationsnetzadresse (122) des zweiten Kommunikationsgeräts (102) einleitet.

10. Verfahren nach einem der Ansprüche 8 oder 9,
bei dem der Tunnel-Controller (132) die vormals bestehende gesicherte Kommunikationsverbindung (104) nach der Umschaltung auf die zusätzliche gesicherte Kommunikationsverbindung abbaut.

11. Mit einem industriellen Automatisierungssystem verbindbares Kommunikationsgerät zur Durchführung eines Verfahrens nach einem der Ansprüche 1 bis 10 mit
- zumindest zwei Kommunikationsnetzanschlüssen zum Anschluss an ein ungesichertes erstes Teilnetz (200) und an ein gesichertes zweites Teilnetz (100), das dem industriellen Automatisierungssystem zugeordnet ist,
- einer Überwachungseinheit (123), die dafür ausgestaltet und eingerichtet ist zu überprüfen, ob eine neue für eine Verbindung zum ersten Teilnetz (200) zugeordnete Kommunikationsnetzadresse (122) gültig wird,
- wobei die Überwachungseinheit (123) zusätzlich dafür ausgestaltet und eingerichtet ist, bei einem Wechsel einer für eine Verbindung zum ersten Teilnetz (200) zugeordneten Kommunikationsnetzadresse (122) und einer noch bestehenden gesicherten Kommunikationsverbindung (104) zu einem weiteren an das erste Teilnetz (200) angeschlossenen Kommunikationsgerät (103) eine Adresswechselankündigung über die bestehende gesicherte Kommunikationsverbindung (104) an das weitere Kommunikationsgerät (103) zu übermitteln.

12. Verbindungssteuerungseinheit für ein zum Kommunikationsgerät gemäß Anspruch 10 komplementäres Kommunikationsgerät zur Durchführung eines Verfahrens nach einem der Ansprüche 1 bis 10, die dafür ausgestaltet und eingerichtet ist,
- einen Aufbau einer gesicherten Kommunikationsverbindung (104) zwischen einem ersten Kommunikationsgerät (103) und einem zweiten Kommunikationsgerät (102) über ein ungesichertes erstes Teilnetz (200) einzuleiten, wobei das zweite Kommunikationsgerät (102) zusätzlich an ein gesichertes zweites Teilnetz (100) angeschlossen ist, das einem industriellen Automatisierungssystem zugeordnet ist,
- bei Empfang einer Adresswechselankündigung für das zweite Kommunikationsgerät (102) einen Aufbau einer zusätzlichen gesicherten Kommunikationsverbindung zwischen dem ersten (103) und dem zweiten Kommunikationsgerät (102) über das erste Teilnetz (200) einzuleiten,
- eine Umschaltung von der bestehenden gesicherten Kommunikationsverbindung (104) auf die zusätzliche gesicherte Kommunikationsverbindung abzuschließen, sobald die zusätzliche gesicherte Kommunikationsverbindung aufgebaut und eingerichtet ist.

## Claims

1. Method for setting up a secure communication connection to a communication device connected to an industrial automation system, in which
- a secure communication connection (104) is set up between a first communication device (103) and a second communication device (102) via a non-secure first subnetwork (200), the second communication device (102) additionally being connected to a secure second subnetwork (100) which is assigned to the industrial automation system,
- a monitoring unit (123) assigned to the second communication device (102) checks whether a new communication network address (122) assigned to the second communication device (102) for a connection to the first subnetwork (200) becomes valid,
- in the event of a change in a communication network address (122) assigned to the second communication device (102) for a connection to the first subnetwork (200) and in the case of a still existing secure communication connection (104) between the first (103) and second communication devices (102), the monitoring unit (123) transmits an address change notification to the first communication device (103) via the existing secure communication connection (104),
- upon receiving an address change notification, the first communication device (103) initiates the setting-up of an additional secure communication connection between the first (103) and second communication devices (102) via the first subnetwork (200),
- the first communication device (103) concludes a changeover from the existing secure communication connection (104) to the additional secure communication connection as soon as the additional secure communication connection has been set up and established.

2. Method according to Claim 1,
in which the second subnetwork (100) is secured with respect to impermissible data traffic by the second communication device (102).

3. Method according to Claim 2,
in which the second communication device (102) is a gateway.

4. Method according to one of Claims 1 to 3,
in which the second communication device (102) is integrated in an industrial automation device or is implemented by means of a computer unit.

5. Method according to one of Claims 1 to 4,
in which the communication network address (122) assigned to the second communication device (102) is an IPv6 address, and in which the monitoring unit (123) transmits the address change notification to the first communication device (103) in the event of an IPv6 prefix change.

6. Method according to Claim 5,
in which the monitoring unit (123) transmits the address change notification to the first communication device (103) in the event of network renumbering.

7. Method according to one of Claims 1 to 6,
in which the existing and/or additional secure communication connection (104) is a virtual private network tunnel.

8. Method according to one of Claims 1 to 7,
in which the monitoring unit (123) transmits the address change notification to a tunnel controller (132) assigned to the first communication device (103).

9. Method according to Claim 8,
in which the tunnel controller (132) initiates the setting-up of the additional secure communication connection in the event of a new communication network address (122) of the second communication device (102) which is included in the address change notification.

10. Method according to either of Claims 8 and 9,
in which the tunnel controller (132) destroys the previously existing secure communication connection (104) following the changeover to the additional secure communication connection.

11. Communication device which can be connected to an industrial automation system and is intended to carry out a method according to one of Claims 1 to 10, having
- at least two communication network connections for connection to a non-secure first subnetwork (200) and to a secure second subnetwork (100) which is assigned to the industrial automation system,
- a monitoring unit (123) which is configured and set up to check whether a new communication network address (122) assigned for a connection to the first subnetwork (200) becomes valid,
- the monitoring unit (123) additionally being configured and set up, in the event of a change in a communication network address (122) assigned for a connection to the first subnetwork (200) and in the case of a still existing secure communication connection (104) to a further communication device (103) connected to the first subnetwork (200), to transmit an address change notification to the further communication device (103) via the existing secure communication connection (104).

12. Connection control unit for a communication device which is complementary to the communication device according to Claim 11 and is intended to carry out a method according to one of Claims 1 to 10, which connection control unit is configured and set up
- to initiate the setting-up of a secure communication connection (104) between a first communication device (103) and a second communication device (102) via a non-secure first subnetwork (200), the second communication device (102) additionally being connected to a secure second subnetwork (100) which is assigned to an industrial automation system,
- upon receiving an address change notification for the second communication device (102), to initiate the setting-up of an additional secure communication connection between the first (103) and second communication devices (102) via the first subnetwork (200),
- to conclude a changeover from the existing secure communication connection (104) to the additional secure communication connection as soon as the additional secure communication connection has been set up and established.

## Revendications

1. Procédé d'établissement d'une liaison de communication sécurisée sur un appareil de communication relié à un système d'automatisation industriel, dans lequel
- on établit, par un premier sous-réseau (200) non sécurisé, une liaison (104) de communication sécurisée entre un premier appareil (103) de communication et un deuxième appareil (102) de communication, le deuxième appareil (102) de communication étant raccordé supplémentairement à un deuxième sous-réseau (100) sécurisé, associé au système d'automatisation industriel,
- une unité (123) de contrôle, associée au deuxième appareil (102) de communication, contrôle si une nouvelle adresse (122) de communication, affectée au deuxième appareil (102) de communication pour une liaison avec le premier sous-réseau (200), est valable,
- l'unité (123) de contrôle transmet, lors d'un changement d'une adresse (122) du réseau de communication, affectée au deuxième appareil (102) de communication pour une liaison avec le premier sous-réseau (200), et alors qu'une liaison (104) de communication sécurisée est encore existante entre le premier (103) et le deuxième appareil (102) de communication, une indication de changement d'adresse à l'appareil (103) de communication, par la liaison (104) de communication sécurisée existante,
- le premier appareil (103) de communication fait, à la réception d'une indication de changement d'adresse, débuter l'établissement par le premier sous-réseau (200) d'une liaison de communication sécurisée supplémentaire entre le premier (103) et le deuxième appareil (102) de communication,
- le premier appareil (103) de communication met fin au passage de la liaison (104) de communication sécurisée existante à la liaison de communication sécurisée supplémentaire, dès que la liaison de communication sécurisée supplémentaire est établie et installée.

2. Procédé suivant la revendication 1,
dans lequel on sécurise le deuxième sous-réseau (100), vis-à-vis d'un trafic de données inadmissible, par le deuxième appareil (102) de communication.

3. Procédé suivant la revendication 2,
dans lequel le deuxième appareil (102) de communication est une gateway.

4. Procédé suivant l'une des revendications 1 à 3,
dans lequel le deuxième appareil (102) de communication est intégré dans un appareil d'automatisation industriel ou est mis en oeuvre par une unité informatique.

5. Procédé suivant l'une des revendications 1 à 4,
dans lequel l'adresse (122) de communication affectée au deuxième appareil (102) de communication est une adresse IPv6 et dans lequel l'unité (123) de contrôle transmet au premier appareil (103) de communication l'indication de changement d'adresse lors d'un changement de préfixe IPv6.

6. Procédé suivant la revendication 5,
dans lequel l'unité (123) de contrôle transmet au premier appareil (103) de communication l'indication de changement d'adresse lors d'un renumbering du réseau.

7. Procédé suivant l'une des revendications 1 à 6,
dans lequel la liaison (104) de communication sécurisée existante et/ou supplémentaire est un virtual private network Tunnel.

8. Procédé suivant l'une des revendications 1 à 7,
dans lequel l'unité (123) de contrôle transmet l'indication de changement d'adresse à un tunnel-controller (132) affecté au premier appareil (103) de communication.

9. Procédé suivant la revendication 8,
dans lequel le tunnel-controller (132) fait débuter l'établissement de la liaison de communication sécurisée supplémentaire pour une nouvelle adresse (122) de communication du deuxième appareil (102) de communication indiquée dans l'indication de changement d'adresse.

10. Procédé suivant l'une des revendications 8 ou 9,
dans lequel le tunnel-controller (132) met fin à la liaison (104) de communication sécurisée existante précédemment, après le passage à la liaison de communication sécurisée supplémentaire.

11. Appareil de communication pouvant être relié à un système d'automatisation industrielle pour effectuer un procédé suivant l'une des revendications 1 à 10, comprenant
- au moins deux bandes de réseau de communication pour le raccordement à un premier sous-réseau (200) non sécurisé et à un deuxième sous-réseau (100) sécurisé, qui est associé au système d'automatisation industrielle,
- une unité (123) de contrôle, qui est conçue et installée pour contrôler si une nouvelle adresse (122) de communication affectée à une liaison au premier sous-réseau (200) est valable,
- dans lequel l'unité (123) de contrôle est conformée et installée en outre pour transmettre à l'autre appareil (103) de communication, lors d'un changement d'une adresse (122) de communication affectée à une liaison avec le premier sous-réseau (200) et d'une liaison (104) de communication sécurisée encore existante avec un autre appareil (103) de communication raccordé au premier sous-réseau (200), une indication de changement d'adresse par la liaison (104) de communication sécurisée existante.

12. Unité de commande de liaison d'un appareil de communication complémentaire de la l'appareil de communication suivant la revendication 10, pour effectuer un procédé suivant l'une des revendications 1 à 10, qui est conformée et installée pour
- faire débuter l'établissement d'une liaison (104) de communication sécurisée entre un premier appareil (103) de communication et un deuxième appareil (102) de communication, par un premier sous-réseau (200) non sécurisé, le deuxième appareil (102) de communication étant raccordé en outre à un deuxième sous-réseau (100) sécurisé, qui est associé à un système d'automatisation industriel,
- à la réception d'une indication de changement d'adresse du deuxième appareil (102) de communication, faire débuter l'établissement d'une liaison de communication sécurisée supplémentaire, entre le premier (103) et le deuxième appareil (102) de communication, par le premier sous-réseau (200),
- - mettre fin au passage de la liaison (104) de communication sécurisée existante à la liaison de communication sécurisée supplémentaire, dès que la liaison de communication sécurisée supplémentaire est établie et installée.
